# EUROPÄISCHE PATENTSCHRIFT

(11) **EP 2 507 529 B1**
(45) Veröffentlichungstag und Bekanntmachung des Hinweises auf die Patenterteilung: **20.05.2015**
(21) Anmeldenummer: 10785043.0
(22) Anmeldetag: 26.11.2010
(51) Int. Cl.: F16C 33/38

(54) **KUGELLAGERKÄFIG**
BALL BEARING CAGE
CAGE DE ROULEMENT À BILLES

(30) Priorität: 01.12.2009 US 265432 P
(43) Veröffentlichungstag der Anmeldung: 10.10.2012
(73) Patentinhaber: Schaeffler Technologies AG & Co. KG, 91074 Herzogenaurach (DE)
(72) Erfinder: CHRISS, Aron, Woodbury Connecticut 06798 (US)
(86) Internationale Anmeldenummer: PCT/EP2010/068275
(87) Internationale Veröffentlichungsnummer: WO 2011/067173

(56) Entgegenhaltungen:
- WO-A1-2006/048052
- DE-A1-102006 030 836
- US-A1- 2006 018 581

## Beschreibung

### Gebiet der Erfindung

Die Erfindung liegt auf dem Gebiet von Hochleistungs-Wälzlagern, insbesondere zur Lagerung von mit hoher Drehzahl umlaufenden Wellen, wie sie beispielsweise in Turboladern, aber auch bei Triebwerken oder in hochdrehenden Turbinen, beispielsweise Gasturbinen, zur Lagerung dortiger Wellen Anwendung finden.

Aus der DE 11 2004 002 481 T5 ist ein solcher Turbolader mit einem Hochleistungs-Wälzlager, einem Schrägkugellager, bekannt. Dieser Turbolader weist ein Turbinenrad auf, welches über eine drehbar gelagerte Welle ein Verdichterrad des Turboladers antreibt. Die Lagerung dieser hochdrehenden Welle erfolgt gemäß der DE 11 2004 002 481 T5 über zwei Schrägkugellager, welche die Welle gegenüber einem ortfesten Gehäuse lagern.

Kugellager, beispielsweise Schrägkugellager oder Rillenkugellager, sind hinreichend bekannt und weisen in der Regel einen Innenring, einen Außenring sowie zwischen dem Innen- und dem Außenring in einer Umfangsrichtung angeordnete Wälzkörper bzw. Kugeln, auf. Die Kugeln werden unter Verwendung eines Kugellagerkäfigs auf gleichmäßig über den Umfang verteiltem Abstand gehalten.

Kugellagerkäfige verschiedener Ausführungen, beispielsweise Blechkäfige oder Massivkäfige, aus verschiedenen Materialien, beispielsweise Stahlblech, Messing, Leichtmetall, Sintereisen, Hartgewebe, sowie unterschiedlicher Bauformen, beispielsweise Fensterkäfige, Schnappkäfige oder Nietkäfig, sind ebenfalls bekannt.

Insbesondere bei Kugellagern von schnell drehenden Wellen, wie beispielsweise Turbinenwellen, treten Käfiginstabilitäten auf, d.h. die Käfige solcher schnell drehenden Kugellagern werden angeregt, was zu Käfigflattern, Käfigvibrationen, erratischen bzw. chaotischen Bewegungen des Käfigs und/oder stoßartigen Belastungen an Käfiganlaufflächen führt. Dieser Effekt verstärkt sich insbesondere bei Erregungen in einem Resonanzbereich des Käfigs. In weiterer Folge können diese Effekte zu Überhitzung des Kugellagers, Schmiermittelzersetzung oder sogar zur Zerstörung des Kugellagers führen. Begleitet werden solche Käfiginstabilitäten meist auch mit erhöhten, anormalen Lagergeräuschen.

Aus der JP 2006105273 A ist ein Kugellager mit "asymmetrisch" angeordneten Kugeln bekannt. Bei diesem "asymmetrischen Kugellager", welches zu einer Vibrations- und Geräuschverminderung des Kugellagers beitragen soll, sind die Kugeln derart asymmetrisch über den Umfang des Kugellagers verteilt, dass sich in Umfangsrichtung des Kugellagers zwei unterschiedliche Abstände zwischen jeweils zwei benachbarten Kugeln ausbilden. Ein erster großer Kugelabstand (RL) ist dabei ein-ein-halb-mall so groß wie ein zweiter kleiner Kugelabstand (RS), bzw. RL=3/2*RS.

Aus der US 2006/0018581 A1 ist ein Lager bekannt, welches einen Innenring, einen Außenring, einen Käfig und eine Mehrzahl von Wälzkörper aufweist, welche in Taschen des Käfigs angeordnet sind. Die Abstände der Wälzkörper variieren auf Grund der unterschiedlichen Abstände der Taschen des Wälzkörpers zueinander. Das Lager ist dabei in mehrere Sektoren aufgeteilt, in welchem sich die Abstände der Wälzkörper wiederholen. Dadurch ist das Lagersystem entlang des Umfangs ausgewuchtet, wodurch Schwingungen des Systems, in welchem das Lager angeordnet ist, unterbunden werden.

Vor diesem Hintergrund besteht die Aufgabe der vorliegenden Erfindung darin, ein Kugellager zu schaffen, das die vorgenannten Nachteile überwindet sowie konstruktiv einfach und kostengünstig herstellbar ist.

Diese Aufgabe wird erfindungsgemäß gelöst durch einen Kugellagerkäfig gemäß dem unabhängigen Patentanspruch.

Der Erfindung liegt die Überlegung zugrunde, dass durch die erfindungsgemäß vorgeschlagene "asymmetrische" Verteilung der Taschen über den Käfigumfang eine gezielte asymmetrische Massenverteilung am Käfig und damit eine gezielte bzw. kontrollierte Exzentrizität und Unwucht des Käfigs erreicht wird. Verbunden damit ist auch eine Verlagerung der Massenmittellinie des Käfigs so, dass diese von der geometrischen Mittellinie des Käfigs abweicht.

Diese kontrollierte Exzentrizität des Käfigs erzeugt in der Umlaufbewegung des Käfigs eine definierte Kraft, welche den oben beschriebenen Käfiginstabilitäten entgegenwirkt. Der Käfig legt sich in seiner Umlaufbewegung gezielt an der Anlauffläche an - und vermeidet dadurch die stoßartigen Belastungen an der Anlauffläche; der Resonanzbereich des Käfigs verschiebt sich hin zu Frequenzen außerhalb des Bereichs der üblichen Erregerfrequenzen und verhindert damit ein Aufschaukeln des Käfigs im Betrieb.

Miteinher mit der gezielten Verlagerung von Masse im - in seiner ursprünglichen Konfiguration, z.B. Durchmesser, Breite, unveränderten - Käfig geht, dass dieses ohne zusätzliches Einbringen von Masse im Käfig erfolgen kann. Das Gewicht des Käfigs bleibt auch bei der erfindungsgemäßen asymmetrischer Verteilung der Taschen im Gesamten unverändert.

Ferner ist weiter von Vorteil, dass die asymmetrische Verteilung der Taschen auch in einer Käfigherstellung serienfähig ist. Große Serien solcher erfindungsgemäßer Käfige können bei gleichen bzw. bei annähernd vergleichbaren Kosten gefertigt werden, da es bei der Erfindung keiner aufwendigen und kostenintensiven Einzelherstellung bzw. Einzelbearbeitung bedarf. Insbesondere bedarf es bei der Erfindung keiner üblichen Nacharbeitung zum Unwuchtausgleich ("Auswuchten") mehr, was Kosten spart.

Weiter von Vorteil erweist sich bei der Erfindung, dass Transportschäden bei Kugellagern vermindert werden können. Werden Lager, insbesondere über größere Strecken, transportiert und während des Transportes, insbesondere stoßartigen, Belastungen ausgesetzt, so können sich "Abdrücke" der Wälzkörper bzw. Riefen in den Laufbahnen der Wälzlager bilden, insbesondere deshalb, weil bei symmetrischer Anordnung der Taschen bzw. symmetrischer Verteilung der Wälzkörper sich diese immer an gleicher bzw. gleichversetzter Stellung bezüglich der Laufbahnen befinden. Die asymmetrische Anordnung der Taschen bzw. die asymmetrische Verteilung der Wälzkörper wirkt diesem Effekt entgegen. Die Wälzkörper stehen immer an unterschiedlicher Stellung bezüglich der Laufbahnen und können dadurch einer Abdruckbildung entgegenwirken.

Um den Abstand zweier Taschen anzugeben bzw. zu bemessen, sind vielfältige Möglichkeiten vorsehbar. So lässt sich beispielsweise der Taschenabstand zweier benachbarter Taschen durch einen Winkel bemessen, welcher gebildet wird durch den Drehmittelpunkt des Käfigs jeweils in Verbindung mit einer Käfigmitte der zwei benachbarten Taschen. Anders ausgedrückt, die Angabe des Taschenabstands erfolgt hier durch den zwischen den beiden Taschenmitten eingeschlossenen Umfangswinkel.

Weiterhin wäre eine Bemessung möglich durch eine Längenangabe bezüglich des Käfigumfangs. Eine solche Bemessung könnte angegeben sein bezüglich der Taschenmittelpunkte zweier benachbarter Taschen. Auch möglich ist hier eine Längenangabe eines jeweils zwei Taschen trennenden Stegs (Stegbreite).

Bevorzugte Weiterbildungen der Erfindung ergeben sich aus den abhängigen Ansprüchen.

Bei einer bevorzugten Weiterbildung kann vorgesehen werden, dass zumindest einige der Abstände im Umfangssektor mit einem gleichen Absolutbetrag zunehmen. Bemisst man beispielsweise den Taschenabstand nach dem eingeschlossenen Umfangswinkel, so wäre hier vorsehbar, dass die Taschenabstände jeweils um einen bestimmten Winkel, beispielsweise 1 °, 2° oder 3°, im Allgemeinen y°, zunehmen (lineare Zunahme), so z.B. im Allgemeinen erster Abstand x°, zweiter Abstand (x+y)° dritter Abstand (x+2*y)°, vierter Abstand (x+3*y)° bzw. im Speziellen erster Abstand x°, zweiter Abstand (x+1)° dritter Abstand (x+2)°, vierter Abstand (x+3)°. Auch ist eine progressive Zunahme der Taschenabstände vorstellbar, z.B. erster Abstand x°, zweiter Abstand (x+1)° dritter Abstand (x+3)°, vierter Abstand (x+6)°. Mischformen sind ebenfalls möglich, z.B. erster Abstand x°, zweiter Abstand (x+1)° dritter Abstand (x+2)°, vierter Abstand (x+2)°.

In einer weiteren bevorzugten Ausgestaltung kann vorgesehen sein, dass eine Anzahl der Kugeltaschen mindestens sechs, insbesondere acht, beträgt und/oder geradzahlig ist.

Die Erfindung kann bevorzugt vorgesehen werden bei Kugellagerkäfigen verschiedener Ausführungen, beispielsweise als Blechkäfige oder Massivkäfige, verschiedener Materialien, beispielsweise Stahlblech, Messing, Leichtmetall, Sintereisen, Hartgewebe, sowie unterschiedlicher Bauformen, beispielsweise bei Fensterkäfigen, Schnappkäfigen oder Nietkäfigen. Besonders bevorzugt ist vorzusehen, den Kugellagerkäfig als Massivkäfig, insbesondere Messing-Massivkäfig, auszubilden.

Weiterhin kann vorgesehen sein, den erfindungsgemäßen Kugellagerkäfig in einem Schrägkugellager, Rillenkugellager oder Spindellager einzusetzen. Besonders bevorzugt kann der erfindungsgemäße Kugellagerkäfig eingesetzt werden zur Anwendung in einem Hochleistungswälzlager zur Lagerung einer mit einer hohen Drehzahl umlaufenden Welle, insbesondere bei einem Turbolader, einem Triebwerk oder bei einer Turbine, insbesondere Gasturbine.

Ausführungsbeispiele der Erfindung werden nachfolgend anhand von Figuren beschrieben. Dabei zeigen:
- Fig. 1:: einen Ausschnitt einer Wälzlageranordnung einer Wellenlagerung in einem Turbolader gemäß einem Ausführungsbeispiel,
- Fig. 2:: einen Käfig eines Kugellagers gemäß einem Ausführungsbeispiel,
- Fig. 3:: eine schematische Darstellung eines Käfigs zur Verdeutlichung einer asymmetrischen Verteilung von Taschen und deren Effekte auf den Käfig,
- Fig. 4:: einen Teilausschnitt der Wälzlageranordnung nach Figur 1 zur Verdeutlichung des erfindungsgemäßen Effektes einer Massenexzentrizität des Käfigs.

### Ausführliche Beschreibung der Zeichnung

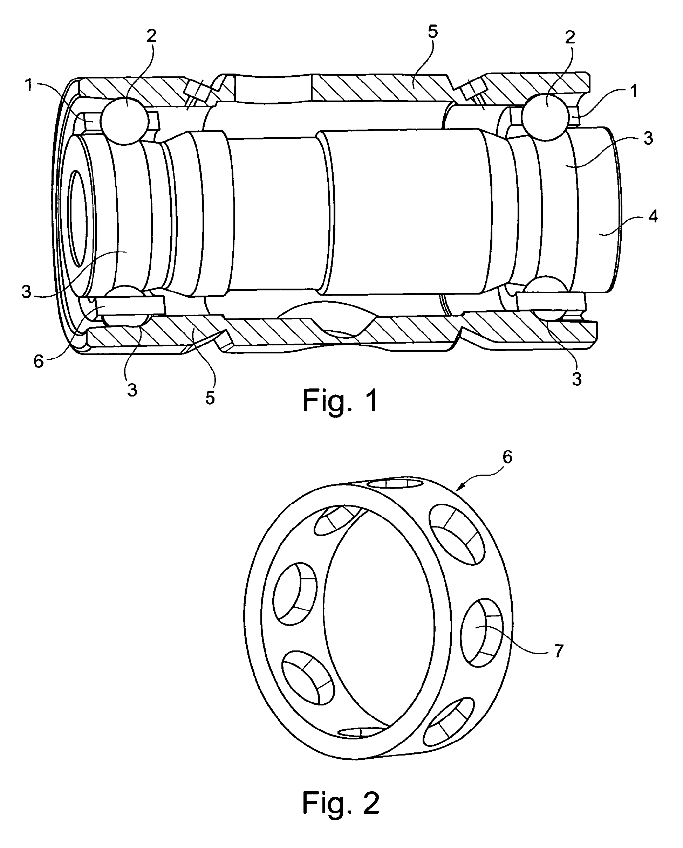

Aus Figur 1 ist ein Ausschnitt einer Wälzlageranordnung einer Wellenlagerung in einem Turbolader zu entnehmen. Dieser Turbolader weist ein Turbinenrad auf (nicht dargestellt), welches über eine drehbar gelagerte Welle 3 ein Verdichterrad (nicht dargestellt) des Turboladers antreibt. Die Lagerung dieser hochdrehenden Welle 3 erfolgt über zwei, in O-Anordnung angeordnete Schrägkugellager 1, welche die Welle 3 gegenüber einem ortfesten Gehäuse bzw. Lagerträger 5 lagern.

Sowohl die Innenlaufbahnen 3 als auch die Außenlaufbahnen 3 der beiden Schrägkugellager 1 sind unmittelbar in die Welle 3 bzw. in den Lagerträger 5 eingebracht. Zwischen der jeweiligen Innenlaufbahn 3 und der zugehörigen Außenlaufbahn 3 der beiden Schrägkugellager 1 sind die Wälzkörper 2, in diesem Fall die Kugeln 2, in zwei Kugelreihen angeordnet.

Um die Kugeln 2 auf Abstand zu halten, sind die Kugelreihen der beiden Schrägkugellagern 1 jeweils in einem Massivkäfig 6, kurz im Folgenden Käfig 6 bezeichnet, angeordnet.

In Figur 2 ist der Käfig 6 dieser Schrägkugellager 1 näher dargestellt. Wie Figur 2 zeigt, weist der Käfig 6 über den Umfang des Käfigs 6 verteilte Taschen 7, in diesem Fall 8 Taschen 7, zur Aufnahme der Kugeln 2 auf.

Die Verteilung der Taschen 7 über den Umfang des Käfigs 6 erfolgt dabei a-symmetrisch, d.h. die Abstände (21, 22, 23, 24, 21', 22', 23', 24') der Taschen 7 sind entgegen üblicher Kugellagerkäfige nicht alle gleich, sondern variieren.

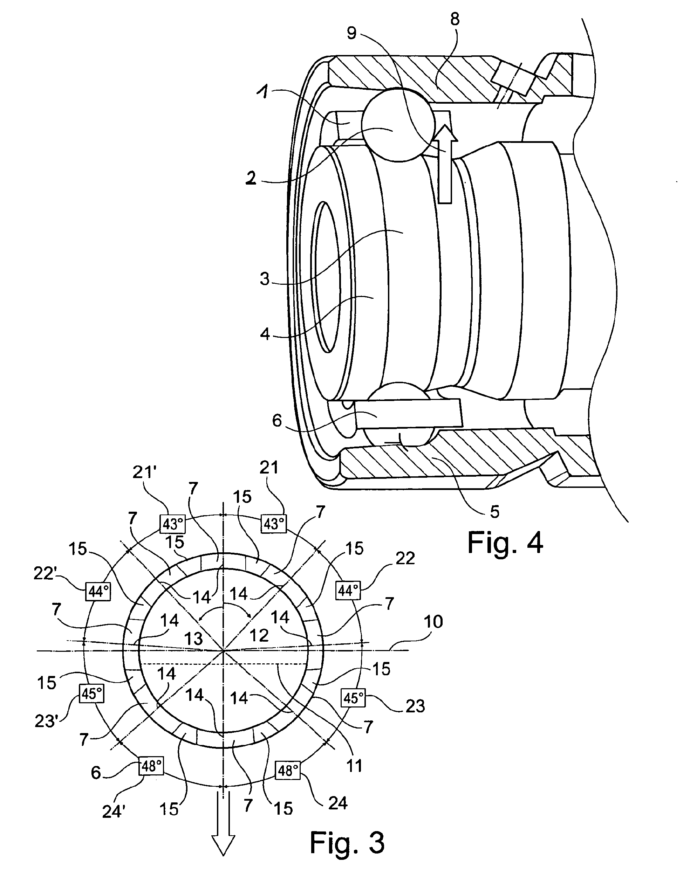

Figur 3 zeigt in schematischer Darstellung diese asymmetrische Verteilung der Taschen 7 dieses Käfigs 6.

Wie Figur 3 zu entnehmen ist, weist der Käfig 6 8 über den Umfang des Käfigs 6 verteilte Taschen 7 auf, deren jeweils zwei benachbarte Taschen 7 durch Stege 15 getrennt sind. Zur Verdeutlichung bzw. zur Beschreibung der asymmetrischen Anordnung der Taschen 7 ist gemäß Figur 3 der Käfig 6 derart ausgerichtet, dass sich eine erste Tasche 7 bzw. deren Taschenmitte in Null- bzw. Zwölf-Uhr-Position befindet.

Im Uhrzeigersinn 12 folgen dieser ersten Tasche 7 eine zweite, dritte und vierte Tasche sowie eine fünfte Tasche 7, welche bzw. deren Taschenmitte sich in Sechs-Uhr-Position befindet. Entgegen dem Uhrzeigersinn folgen beginnend ebenfalls bei der ersten Tasche 7 eine sechste, siebte und achte Tasche sowie - dann wieder - die fünfte Tasche 7.

Wie weiter Figur 3 zeigt beträgt der Abstand 21 - in diesem Fall immer angegeben als (Zwischen-)Umfangswinkel - zwischen der ersten und der zweiten Tasche 7 bzw. der Abstand 21' zwischen der ersten und der sechsten Tasche 7 jeweils 43°. Der Abstand 22 zwischen der zweiten und der dritten Tasche 7 bzw. der Abstand 22'zwischen der sechsten und der siebten Tasche 7 jeweils 44°. Der Abstand 23 zwischen der dritten und der vierten Tasche 7 bzw. der Abstand 23'zwischen der siebten und der achten Tasche 7 jeweils 44°. Der Abstand 24 zwischen der vierten und der fünften Tasche 7 bzw. der Abstand 24'zwischen der siebten und der fünften Tasche 7 24' jeweils 48°.

Nach beschriebener asymmetrischer Anordnung der Taschen 7 weist der Käfig 6 eine Achsensymmetrie bezüglich einer Spiegelachse auf, welche definiert wird durch die Taschenmitte der ersten Tasche 6, den Drehmittelpunkt des Käfigs 6 sowie der Taschenmitte der fünften Tasche 6.

Weiterhin führt diese asymmetrische Verteilung der Taschen 6 dazu, dass die Stegbreiten beginnend bei der ersten Tasche 6 sowohl in Umfangsrichtung 12 als auch in Gegenumfangrichtung 13 zunehmen, was - im Vergleich zu herkömmlichen Käfigen mit gleich über den Umfang verteilten Taschen - zu einer Materialverschiebung bzw. Materialanhäufung und Massenverschiebung in den bzw. im Bereich der vierten, fünften und siebten Tasche 7 führt.

Dieses wiederum führt, wie auch in Figur 3 verdeutlicht ist, dazu, dass - auch im Unterschied zu herkömmlichen Käfigen - die Mittellinie der Massenverteilung 11 sich in Richtung dieser Massenverschiebung verschiebt und damit von der geometrischen Mittellinie 10 des Käfigs 6 abweicht.

Verbunden mit dieser "asymmetrische" Verteilung der Taschen 7 über den Käfigumfang und der gezielten asymmetrischen Massenverteilung am Käfig ist eine gezielte bzw. kontrollierte Exzentrizität und Unwucht des Käfigs 6.

Diese kontrollierte Exzentrizität des Käfigs erzeugt in der Umlaufbewegung des Käfigs 6 eine definierte Kraft F 9 (Unwucht F 9), welche mathematisch wie folgt beschrieben werden kann und den Käfiginstabilitäten entgegenwirkt, F = ω² * Käfigmasse * Exzentrizität (mit ω = Umlaufgeschwindigkeit).

Der Käfig 6 legt sich, wie Figur 4 zeigt, in seiner Umlaufbewegung gezielt an der Anlauffläche 8 an - und vermeidet dadurch die stoßartigen Belastungen an der Anlauffläche 8.

### Bezugszeichen

- 1: Schrägkugellager
- 2: Wälzkörper, Kugel
- 3: Laufbahn
- 4: Welle
- 5: Lagerträger, Gehäuse
- 6: Käfig
- 7: Tasche
- 8: Anlauffläche (des Käfigs 6)
- 9: Kraftvektor resultierend aus der Massenexzentrizität
- 10: Geometrische Mittellinie
- 11: Mittellinie der Massenverteilung
- 12: Umfangsrichtung
- 13: Gegenumfangsrichtung
- 14: Taschenmitte
- 15: Steg

- 21 - 24: (Umfangs-)Winkel zwischen zwei benachbarten Taschen 7
- 21'- 24': (Umfangs-)Winkel zwischen zwei benachbarten Taschen 7

## Patentansprüche

1. Kugellagerkäfig mit einem ringförmigen Wälzkörperhaltekörper (6), welcher über einen Umfang des Wälzkörperhaltekörpers (6) verteilte Kugeltaschen (7) zur Aufnahme von kugelförmigen Wälzkörpern (2) aufweist, wobei die Kugeltaschen (7) derart über den Umfang verteilt sind, dass Abstände von jeweils zwei benachbarten Kugeltaschen(7) in einer Umfangsrichtung beginnend bei einem kleinsten Abstand zwischen zwei benachbarten Taschen (7) in einem Umfangssektor von 180° zunehmen, **dadurch gekennzeichnet, dass** die Abstände von jeweils zwei benachbarten Kugeltaschen (7) auch in einer Gegenumfangsrichtung beginnend bei einem kleinsten Abstand zwischen zwei benachbarten Kugeltaschen (7) in einem weiteren Umfangssektor von 180° zunehmen .

2. Kugellagerkäfig nach mindestens einem der voranstehenden Ansprüche, bei dem zumindest einige der Abstände im Umfangssektor mit einem gleichen Absolutbetrag zunehmen.

3. Kugellagerkäfig nach mindestens einem der voranstehenden Ansprüche, bei dem eine Anzahl der Kugeltaschen (7) mindestens sechs, insbesondere acht, beträgt und/oder geradzahlig ist.

4. Kugellagerkäfig nach mindestens einem der voranstehenden Ansprüche, bei dem der Kugellagerkäfig (6) ein Blechkäfig, insbesondere ein Messingblechkäfig, ist.

5. Kugellagerkäfig nach mindestens einem der voranstehenden Ansprüche, bei dem der Kugellagerkäfig (6) ein Massivkäfig, insbesondere ein Messingkäfig, ein Stahlkäfig, ein Leichtmetallkäfig, ein Sintereisen, ein Hartgewebekäfig oder ein Kunststoffkäfig ist.

6. Kugellagerkäfig nach mindestens einem der voranstehenden Ansprüche, bei dem der Kugellagerkäfig (6) ein Fensterkäfig, ein Nietkäfig oder ein Schnappkäfig ist.

7. Kugellagerkäfig nach mindestens einem der voranstehenden Ansprüche, eingesetzt in einem Schrägkugellager oder Rillenkugellager.

8. Kugellagerkäfig nach mindestens einem der voranstehenden Ansprüchen, eingesetzt zur Anwendung in einem Hochleistungswälzlager zur Lagerung einer mit einer hohen Drehzahl umlaufenden Welle, insbesondere bei einem Turbolader, einem Triebwerk oder bei einer Turbine, insbesondere Gasturbine.

## Claims

1. Ball bearing cage with an annular rolling body retainer (6) which has ball pockets (7) distributed over a circumference of the rolling body retainer (6) in order to receive spherical rolling bodies (2), wherein the ball pockets (7) are distributed over the circumference in such a manner that distances between in each case two adjacent ball pockets (7) increase in a circumferential direction, starting at a smallest distance between two adjacent pockets (7) in a circumferential sector of 180°, **characterized in that** the distances between in each case two adjacent ball pockets (7) also increase in an opposed circumferential direction, starting at a smallest distance between two adjacent ball pockets (7) in a further circumferential sector of 180°.

2. Ball bearing cage according to Claim 1, in which at least some of the distances in the circumferential sector increase at an identical absolute amount.

3. Ball bearing cage according to at least one of the preceding claims, in which there is at least six, in particular eight, ball pockets (7) and/or an even number thereof.

4. Ball bearing cage according to at least one of the preceding claims, in which the ball bearing cage (6) is a sheet-metal cage, in particular a sheet brass cage.

5. Ball bearing cage according to at least one of the preceding claims, in which the ball bearing cage (6) is a solid cage, in particular a brass cage, a steel cage, a light metal cage, a sintered iron cage, a fabric-reinforced laminate cage or a plastics cage.

6. Ball bearing cage according to at least one of the preceding claims, in which the ball bearing cage (6) is a window cage, a riveted cage or a snap-type cage.

7. Ball bearing cage according to at least one of the preceding claims, employed in an angular ball bearing or in a deep-groove ball bearing.

8. Ball bearing cage according to at least one of the preceding claims, employed for use in a high-power rolling bearing for the mounting of a shaft revolving at a high speed, in particular in a turbocharger, a power plant or in a turbine, in particular gas turbine.

## Revendications

1. Cage de roulement à billes comprenant un corps de retenue de corps de roulement annulaire (6), lequel comprend des cavités pour billes (7) réparties sur une périphérie du corps de retenue de corps de roulement (6) pour la réception de corps de roulement sphériques (2), les cavités pour billes (7) étant réparties sur la périphérie de telle sorte que des distances entre deux cavités pour billes adjacentes (7) respectives augmentent dans un sens périphérique commençant au niveau d'une distance la plus petite entre deux cavités adjacentes (7) dans un secteur périphérique de 180°, **caractérisée en ce que** les distances entre deux cavités pour billes adjacentes (7) respectives augmentent également dans un sens périphérique opposé commençant au niveau d'une distance la plus petite entre deux cavités pour billes adjacentes (7) dans un secteur périphérique supplémentaire de 180°.

2. Cage de roulement à billes selon la revendication 1, dans laquelle au moins certaines des distances dans le secteur périphérique augmentent avec une valeur absolue identique.

3. Cage de roulement à billes selon au moins l'une quelconque des revendications précédentes, dans laquelle un nombre des cavités pour billes (7) vaut au moins six, en particulier huit, et/ou est pair.

4. Cage de roulement à billes selon au moins l'une quelconque des revendications précédentes, la cage de roulement à billes (6) étant une cage en tôle, en particulier une cage en tôle de laiton.

5. Cage de roulement à billes selon au moins l'une quelconque des revendications précédentes, la cage de roulement à billes (6) étant une cage pleine, en particulier une cage en laiton, une cage en acier, une cage en métal léger, une cage en fer fritté, une cage en tissu dur ou une cage en plastique.

6. Cage de roulement à billes selon au moins l'une quelconque des revendications précédentes, la cage de roulement à billes (6) étant une cage à fenêtres, une cage rivetée ou une cage à encliquetage.

7. Cage de roulement à billes selon au moins l'une quelconque des revendications précédentes, utilisée dans un roulement à billes à contact oblique ou un roulement à billes à gorge profonde.

8. Cage de roulement à billes selon au moins l'une quelconque des revendications précédentes, utilisée pour l'application dans un roulement à haute performance pour le support sur palier d'un arbre tournant à une vitesse de rotation élevée, en particulier dans un turbocompresseur, dans un groupe motopropulseur ou dans une turbine, en particulier une turbine à gaz.
